# EUROPÄISCHE PATENTANMELDUNG

(11) **EP 3 043 459 A1**
(43) Veröffentlichungstag der Anmeldung: **13.07.2016**
(21) Anmeldenummer: 15150501.3
(22) Anmeldetag: 08.01.2015
(51) Int. Cl.: H02M 1/08, H02M 7/483, H02M 1/00

(54) **Modularer Multilevelumrichter mit phasenspezifischen Modulatoren**

(71) Anmelder: Siemens Aktiengesellschaft, 80333 München (DE)
(72) Erfinder: Blum, Manuel, 85521 Ottobrunn (DE); Galek, Marek, 80339 München (DE)

(57) **Zusammenfassung**

Die Erfindung betrifft einen getakteter Energiewandler (20) mit wenigstens zwei elektrisch miteinander gekoppelten Wandlereinheiten (22) sowie einer Steuereinrichtung (24) zum Steuern der Wandlereinheiten (22), wobei jede der Wandlereinheiten (22) einen Steuerungsanschluss (26) zum Anschließen an die Steuereinrichtung (24) aufweist und wobei jede der Wandlereinheiten (22) wenigstens ein Wandlermodul (18) mit einer Reihenschaltung aus zwei in Reihe geschalteten Halbleiterschaltern sowie einer Treiberschaltung zum Steuern aller Halbleiterschalter des wenigstens einen Wandlermoduls (18) in einem Schaltbetrieb aufweist, wobei dass jede der Wandlereinheiten (22) einen an die Treiberschaltung des wenigstens einen Wandlermoduls (18) angeschlossenen Taktgeber (28) aufweist, der den Steuerungsanschluss (26) bereitstellt und der eingerichtet ist, Steuersignale für die Halbleiterschalter des wenigstens einen Wandlermoduls (18) der Wandlereinheit (22) zu erzeugen.

## Beschreibung

Die vorliegende Erfindung betrifft einen getakteten Energiewandler mit wenigstens zwei miteinander elektrisch gekoppelten Wandlereinheiten sowie einer Steuereinrichtung zum Steuern der Wandlereinheiten, wobei jede der Wandlereinheiten einen Steuerungsanschluss zum Anschließen an die Steuereinrichtung aufweist und wobei jede der Wandlereinheiten wenigstens ein Wandlermodul mit einer Reihenschaltung aus zwei in Reihe geschalteten Halbleiterschaltern sowie einer Treiberschaltung zum Steuern aller Halbleiterschalter des wenigstens einen Wandlermoduls in einem Schaltbetrieb aufweist.

Getaktete Energiewandler der gattungsgemäßen Art sind dem Grunde nach bekannt, sodass es eines gesonderten druckschriftlichen Nachweises hierfür nicht bedarf. Getaktete Energiewandler sind vorliegend unter anderem Umrichter, mittels denen eine Energiewandlung zwischen zwei unterschiedlichen Wechselspannungen erreicht werden kann. Darüber hinaus kann der getaktete Energiewandler auch ein Mehrpegelenergiewandler sein, wie sie häufig im Bereich einer Hochspannungs-Gleichspannungsübertragung (HGÜ) eingesetzt werden. Mehrpegelenergiewandler werden in der Fachsprache auch Multi-Level-Konverter, MMC, M2C oder dergleichen genannt.

Umrichter der gattungsgemäßen Art weisen häufig zwei an einem gemeinsamen Gleichspannungszwischenkreis betriebene Wechselrichter auf, die bidirektional hinsichtlich des Energieflusses betreibbar sind. Je nach Energieflussrichtung arbeitet einer der beiden Wechselrichter in einem Gleichrichtbetrieb, wohingegen der andere der beiden Wechselrichter in einem Wechselrichterbetrieb arbeitet. Je nach Energieflussrichtung kann zwischen den Betriebsarten in Bezug auf den jeweiligen Wechselrichter gewechselt werden. Umrichter der vorbeschriebenen Art sind in vielfältiger Weise und in großer Stückzahl im Einsatz. Insbesondere sind sie für einen mittleren Leistungsbereich von etwa 1kW bis etwa 120kW oder auch für eine hohe Leistung von größer als 120kW im Einsatz.

Mehrpegelenergiewandler werden unter anderem eingesetzt, um eine Energieversorgung mittels Gleichspannungen in einem Bereich von mehreren 100kV sowie Leistungen im Bereich von 1GW oder mehr vorzusehen. Vorzugsweise werden solche Mehrpegelenergiewandler bidirektional eingesetzt, sodass sowohl elektrische Energie von einer Wechselspannungsseite zu einer Gleichspannungsseite als auch umgekehrt gewandelt werden kann. Üblicherweise erfolgt die Wandlung ohne wesentliche Änderung der Spannungspegel, das heißt, dass der Pegel einer maximalen Amplitude der Wechselspannung im Wesentlichen einem Pegel einees Gleichspannungszwischenkreises entspricht. Aufgrund der Schaltungsstruktur des Mehrpegelenergiewandlers ist die Steuerung der Wandlermodule der Wandlereinheiten gegenüber alternativen Schaltungskonzepten vergleichsweise einfach und betriebssicher, weshalb sich der Mehrpegelenergiewandler besonders für Anwendungen im Bereich der HGÜ eignet.

Sowohl gattungsgemäße Umrichter als auch gattungsgemäße Mehrpegelenergiewandler haben sich dem Grunde nach bewährt. Gleichwohl erweist es sich als aufwendig, derartige getaktete Energiewandler hinsichtlich spezifischer Anforderungen angepasst herzustellen. Bei den getakteten Energiewandlern des Stands der Technik ist üblicherweise eine Einzelfertigung beziehungsweise eine Kleinserienfertigung vorgesehen. Häufig werden die getakteten Energiewandler spezifisch für eine spezielle Energiewandlungsaufgabe angepasst hergestellt. Dies ist aufwändig und unflexibel.

Der Erfindung liegt die Aufgabe zugrunde, eine Schaltungsstruktur für einen getakteten Energiewandler anzugeben, die einen höheren Grad an Flexibilität gegenüber dem Stand der Technik erlaubt.

Als Lösung wird mit der Erfindung ein getakteter Energiewandler gemäß dem unabhängigen Anspruch 1 vorgeschlagen. Vorteilhafte Weiterbildungen ergeben sich anhand von Merkmalen der abhängigen Ansprüche.

Mit der Erfindung wird insbesondere vorgeschlagen, dass bei einem getakteten Energiewandler jede der Wandlereinheiten einen, insbesondere eigenen, an die Treiberschaltung des wenigstens einen Wandlermoduls angeschlossenen Taktgeber aufweist, der den Steuerungsanschluss bereitstellt und der eingerichtet ist, Steuersignale für die Halbleiterschalter des wenigstens einen Wandlermoduls der Wandlereinheit zu erzeugen.

Jede Wandlereinheit hat gemäß der Erfindung also einen eigenen Taktgeber, der die Steuersignale für die Halbleiterschalter der jeweiligen Wandlermodule einer jeweiligen Wandlereinheit erzeugt und bereitstellt. Die Steuersignale sind vorzugsweise digitale Signale, sodass die Halbleiterschalter im Schaltbetrieb betrieben werden können. Der Taktgeber erzeugt entsprechend einer Vorgabe durch die Steuereinrichtung, die Steuersignale, die beispielsweise vorgebbaren Takt- beziehungsweise Pulsmustern entsprechen. Dadurch kann der Energiewandler quasi modular durch Wandlereinheiten erstellt werden, die je nach Bedarf den Energiewandler bildend zusammengeschaltet werden. Darüber hinaus erlaubt es die Erfindung, die Taktmustergenerierung unmittelbar in der Wandlereinheit vorzusehen, sodass die übergeordnete Steuereinrichtung hiervon entlastet werden kann. Dies hat den Vorteil, dass die Steuereinrichtung selbst nicht mehr die Taktsignale zu generieren braucht und somit Kommunikationsaufwand reduziert werden kann, zumal der Taktgeber in der Regel in unmittelbarer Nähe zu den Halbleiterschaltern angeordnet ist. Darüber hinaus lässt sich durch diese Ausgestaltung erreichen, dass die Dynamik der Steuerung der Wandlereinheiten und letztendlich des getakteten Energiewandlers insgesamt beschleunigt werden kann.

Es ist ferner gegenüber dem Stand der Technik möglich, Wandlereinheiten vorzufertigen und bedarfsweise zu einem getakteten Umrichter bereitzustellen, sodass der hierdurch gebildete getaktete Energiewandler an eine spezifische Anforderung angepasst ausgebildet ist. Hierdurch kann eine Standardisierung und eine Kostenreduzierung erreicht werden. Insbesondere ermöglicht es die Erfindung, vorgeprüfte Wandlereinheiten zu einem getakteten Energiewandler zusammenzustellen, sodass auf diese Weise mit geringem Zeitaufwand individuelle getaktete Energiewandler hergestellt werden können. Insbesondere kann Aufwand für die Konstruktion und die Entwicklung eines jeweiligen getakteten Energiewandlers reduziert werden.

Es wird ferner vorgeschlagen, dass die Steuereinrichtung zumindest bei einer Inbetriebsetzung des getakteten Energiewandlers die an ihr angeschlossenen Wandlereinheiten erkennt und die eine Steuerung automatisch entsprechend einstellt. Darüber hinaus kann vorgesehen sein, dass die Steuereinrichtung erkennt, welcher Art die in der jeweiligen Wandlereinheit vorgesehenen Wandlermodule sind und welche Anzahl von Wandlermodulen in der jeweiligen Wandlereinheit vorgesehen ist.

Halbleiterschalter im Sinne dieser Offenbarung sind vorzugsweise steuerbare elektronische Schaltelemente, beispielsweise ein Transistor, ein Thyristor, insbesondere ein Gate-Turn-Off-Thyristor (GTO), Kombinationsschaltungen hiervon, insbesondere mit parallel geschalteten Freilaufdioden, beispielsweise ein Metalloxyd-Semiconductor-Feldeffekttransistor (MOSFET), ein Isolated-Gate-Bipolar-Transistor (IGBT), vorzugsweise mit einer integrierten Freilaufdiode oder dergleichen.

Der Schaltbetrieb des Halbleiterschalters bedeutet, dass in einem eingeschalteten Zustand zwischen den eine Schaltstrecke bildenden Anschlüssen des Halbleiterschalters ein sehr geringer elektrischer Widerstand bereitgestellt wird, sodass ein hoher Stromfluss bei sehr kleiner Restspannung möglich ist. Im ausgeschalteten Zustand ist die Schaltstrecke des Halbleiterschalters hochohmig, das heißt, sie stellt einen hohen elektrischen Widerstand bereit, sodass auch bei hoher, an der Schaltstrecke anliegender Spannung im Wesentlichen kein oder nur ein sehr geringer, insbesondere vernachlässigbarer, Stromfluss vorliegt. Hiervon unterscheidet sich ein Linearbetrieb, der aber bei getakteten Energiewandlern nicht zum Einsatz kommt. Der Schaltbetrieb sieht vorzugsweise lediglich diese beiden Schaltzustände vor.

Die Wandlereinheit des getakteten Energiewandlers weist zumindest ein einziges Wandlermodul auf. In einem solchen Fall, bei dem die wenigstens zwei elektrisch miteinander gekoppelten Wandlereinheiten jeweils ein einziges Wandlermodul aufweisen, kann der getaktete Energiewandler einen Umrichter bilden, wobei jede der Wandlereinheiten einen eigenen Wechselrichter bilden kann. Dadurch ist es zum Beispiel möglich, den getakteten Energiewandler zur energietechnischen Kopplung von zwei voneinander getrennten Wechselspannungen einzusetzen. Er kann aber auch einen Brems-Chopper oder dergleichen bilden.

Das Wandlermodul weist zumindest eine Reihenschaltung aus zwei in Reihe geschalteten Halbleiterschaltern auf. Entsprechend wird in diesem Fall die Schaltungsstruktur einer Halbbrücke gebildet. Ein solcher Wechselrichter eignet sich beispielsweise für den Betrieb an einer einphasigen Wechselspannung. Ist ein Anschluss an eine mehrphasige Wechselspannung vorgesehen, so sind für jede der Phasen entsprechende Wandlereinheiten vorzusehen.

Die Wandlermodule umfassen ferner jeweilige Treiberschaltungen, die an die jeweiligen Halbleiterschalter der jeweiligen Wandlermodule angeschlossen sind. Die Treiberschaltungen dienen dazu, zugeführte Steuersignale derart weiterzuverarbeiten, dass sie unmittelbar für die Ansteuerung der Halbleiterschalter genutzt werden können. Die Treiberschaltungen sind deshalb unmittelbar an Steuerelektroden der jeweiligen Halbleiterschalter angeschlossen und in der Regel auch in räumlicher Nähe hierzu angeordnet. Die Treiberschaltungen ihrerseits besitzen jeweils Eingangsanschlüsse, an denen ihnen die Steuersignale für die jeweiligen Halbleiterschalter zugeführt werden. In der Regel stellt die Treiberschaltung für jeden Halbleiterschalter eine eigene Treibereinheit bereit, die in der Regel an den jeweiligen Halbleiterschalter angepasst ausgebildet ist. Die Treiberschaltung berücksichtigt dabei physikalische Eigenschaften der Halbleiterschalter in Bezug auf deren Steuerung im Schaltbetrieb. Die Treiberschaltung kann als eine elektronische Hardwareschaltung ausgebildet sein, die im Bereich der Halbleiterschalter angeordnet ist. Die Energieversorgung der Treiberschaltung wird vorzugsweise wandlermodulseitig bereitgestellt. Darüber hinaus kann vorgesehen sein, dass die Treiberschaltung eine galvanische Trennung der Steuersignale von den Steueranschlüssen der Halbleiterschaltung bereitstellt. Dies ist insbesondere vorteilhaft, wenn die Treiberschaltung als eine einheitliche Baugruppe mehrere Halbleiterschalter steuert, die auf unterschiedlichem elektrischem Bezugspotential betrieben werden.

Erfindungsgemäß umfasst die Wandlereinheit des getakteten Energiewandlers einen eigenen Taktgeber. Dieser Taktgeber liefert Steuersignale an die Treiberschaltung, sodass die Treiberschaltung entsprechend der Steuersignale des Taktgebers die Halbleiterschalter im Schaltbetrieb steuern kann. Der Taktgeber ist deshalb dazu ausgelegt entsprechende Taktmuster für die Halbleiterschalter der Wandlermodule zu erzeugen. Der Taktgeber selbst kann als Hardwareschaltung ausgebildet sein, die beispielsweise in Form eines Halbleiterchips, beispielsweise eines ASICs oder eines FPGAs ausgebildet sein kann. Darüber hinaus besteht natürlich die Möglichkeit, wenn die Wandlereinheiten jeweils lediglich ein einziges Wandlermodul aufweisen, die Treiberschaltung einstückig mit dem Taktgeber auszubilden. Dies kann zum Beispiel vorteilhaft bei einem Umrichter realisiert werden.

Dadurch dass der Taktgeber die Steuersignale für die Halbleiterschalter erzeugt, kann dieser Aufwand bei der Steuereinrichtung eingespart werden und die Steuereinrichtung auf diese Weise vereinfacht werden. Darüber hinaus ermöglicht es die Erfindung die Steuereinheit auf die reine Steueraufgabe für den getakteten Energiewandler zu konzentrieren, sodass sie auf einfache Weise auch für unterschiedlichste Anwendungen des getakteten Energiewandlers einfach angepasst werden kann. Es ist also bei der Erfindung nicht mehr erforderlich, die Steuereinrichtung auf aufwändige Weise für bestimmte Anwendungen zu programmieren beziehungsweise zu adaptieren. Dadurch schafft die Erfindung einen modulartigen Aufbau des getakteten Energiewandlers.

Darüber hinaus kann der Kommunikationsaufwand zwischen der Steuereinrichtung und den Halbleiterschaltern erheblich reduziert werden, weil aufgrund der konstruktiven Anordnung der Taktgeber, der die Steuersignale für die Halbleiterschalter gemäß der Erfindung erzeugt, in räumlicher Nähe zu den Halbleiterschaltern angeordnet ist. Insbesondere ermöglicht es die Erfindung dadurch, eine Kommunikationshardware zu reduzieren. Schließlich erhöht sich dadurch auch die Dynamik des getakteten Energiewandlers, und zwar auf kurzzeitige Änderungen hinsichtlich des Energiewandlers schnell reagieren zu können. Die Steuereinrichtung braucht deshalb lediglich ein einfaches Steuersignal für den Taktgeber zu erzeugen, um beispielsweise eine Energieflussrichtung der jeweiligen zugeordneten Wandlereinheit ändern zu können. Die Steuereinrichtung benötigt nicht mehr die Ermittlung der erforderlichen Steuersignale für die Halbleiterschalter. Dies leistet vorort der Taktgeber.

Mit der Erfindung ist es deshalb möglich, einen neuen Trend zu setzen, und zwar fortführend von diskreten Systemen für getaktete Energiewandler hin zu einem modularen Aufbau für einen getakteten Energiewandler. Neben Mehrpegelenergiewandlern oder auch MHF-Umrichtern in Umrichtertechnik betrifft dies auch mehrphasige Hochsetz- beziehungsweise Tiefsetzsteller (Boost, Buck), modulare DC-DC-Wandler in der Konvertertechnik und/oder dergleichen.

Im Stand der Technik ist der Aufbau solcher Geräte dagegen stark durch zentrale Elemente bestimmt. Dies betrifft insbesondere die Ansteuerung des Umrichters. Da die Ansteuerung modularer Systeme nur auf einer Geräteebene realisiert ist, sind für den Betrieb eines Umrichterverbundes eine zusätzliche Kommunikationsschnittstelle sowie eine zusätzliche Steuerung erforderlich. Ein Beispiel hierfür stellt ein Umrichter dar, der eine energietechnische Kopplung zwischen zwei Wechselspannungen bereitstellt oder der Betrieb eines zusätzlichen Brems-Choppers. In den beiden vorgenannten Fällen verfügen die jeweiligen Geräte über eine eigenständige Steuerung, die über eine zusätzliche Kommunikationskomponente mit der übergeordneten Steuereinrichtung kommunizieren. Eine solche zusätzliche Kommunikation ist beispielsweise durch die DRIVE-CLiQ-Technologie™ gegeben. Diese komplexe Steuerung führt zu einer begrenzten regelungstechnischen Dynamik. Darüber hinaus ist die Flexibilität hinsichtlich der Anwendungen gering.

Gemäß einer vorteilhaften Weiterbildung wird vorgeschlagen, dass das Wandlermodul eine zu der Reihenschaltung parallelgeschaltete, zweite Reihenschaltung aus zwei weiteren in Reihe geschalteten Halbleiterschaltern aufweist, wobei der Taktgeber eingerichtet ist, die Steuersignale für sämtliche Halbleiterschalter des Wandlermoduls der jeweils zugeordneten Wandlereinheit zu erzeugen. Durch die hier angegebene Schaltungsstruktur wird die Schaltungsstruktur einer Vollbrücke für das Wandlermodul angegeben. Die Schaltungsstruktur der Vollbrücke erlaubt es, den Dynamikbereich zu verdoppeln. Dieser Vorteil geht allerdings einher mit dem Aufwand der zusätzlichen Halbleiterschalter und einem entsprechenden Steuerungsaufwand. Je nach Anwendung kann es dennoch vorteilhaft sein, die Schaltungsstruktur einer Vollbrücke zu nutzen. Hierdurch kann eine weitere Verbesserung der Flexibilität in Bezug auf den getakteten Energiewandler erreicht werden.

Gemäß einer weiteren Ausgestaltung wird vorgeschlagen, dass die Wandlereinheiten an einem gemeinsamen Gleichspannungszwischenkreis des getakteten Energiewandlers parallelgeschaltet angeschlossen sind. Dies ermöglicht es, Energie zwischen den Wandlereinheiten auszutauschen, um einen Energiefluss in einer gewünschten vorgebbaren Energieflussrichtung einstellen zu können. Beispielsweise kann bei einem Umrichter vorgesehen sein, dass zwei Wechselrichter an dem gemeinsamen Gleichspannungszwischenkreis angeschlossen sind. Mittels der Wechselrichter ist dann eine energietechnische Kopplung zwischen zwei Wechselspannungen möglich. Darüber hinaus kann auch vorgesehen sein, dass bei einer mehrphasigen Wechselspannung Wandlereinheiten für jede Phase der Wechselspannung vorgesehen sind und diese Wandlereinheiten an dem gemeinsamen Gleichspannungszwischenkreis angeschlossen sind. Dadurch kann eine Energieverteilung zwischen den unterschiedlichen Phasen der Wechselspannung erreicht werden. Beispielsweise kann dies durch einen Mehrpegelenergiewandler genutzt werden.

Gemäß einer weiteren Ausgestaltung wird vorgeschlagen, dass jedes der Wandlermodule der Wandlereinheiten einen zur Reihenschaltung der Halbleiterschalter parallelgeschalteten Wandlermodulkondensator aufweist. Hierdurch können Wandlermodule geschaffen werden, die sich für den Einsatz bei Mehrpegelenergiewandlern eignen. Somit können auch die Wandlereinheiten zum Zwecke der Ausbildung eines Mehrpegelenergiewandlers modulartig konstruiert sein. Die Flexibilität kann dadurch weiter erhöht werden.

Gleichzeitig erweist es sich als vorteilhaft, wenn der Taktgeber die Halbleiterschalter sämtlicher Wandlermodule einer dem Taktgeber zugeordneten Wandlereinheit anzusteuern vermag. Dadurch kann insgesamt eine besonders günstige Konstruktion für einen Mehrpegelenergiewandler erreicht werden. Besonders vorteilhaft lässt sich diese Ausgestaltung mit einer zweiten Reihenschaltung von Halbleiterschaltern in den Wandlermodulen kombinieren. Mittelanschlüsse der Reihenschaltungen bilden dann die Anschlüsse der Wandlermodule. Ansonsten bildet bei einer Halbbrückenstruktur der Mittelanschluss der einen Reihenschaltung zusammen mit einem der beiden Anschlüsse an dem Wandlermodulkondensator die Anschlüsse des Wandlermoduls.

Um einen Mehrpegelenergiewandler als getakteten Energiewandler zu bilden, wird vorgeschlagen, dass jede der Wandlereinheiten wenigstens zwei Wandlermodule aufweist, die über wenigstens einen Mittelanschluss der Reihenschaltung der jeweiligen Wandlermodule kaskadiert angeschlossen sind, wobei der Taktgeber eingerichtet ist, die Steuersignale für sämtliche Halbleiterschalter der Wandlermodule der jeweils zugeordneten Wandlereinheit zu erzeugen. Dadurch lässt sich auf einfache Weise ein modular aufgebauter Mehrpegelenergiewandler realisieren, der für die unterschiedlichsten Anwendungen auf einfachste Weise angepasst werden kann. So kann beispielsweise vorgesehen sein, dass der Mehrpegelenergiewandler durch Hinzufügen einer geeigneten Anzahl von Wandlereinheiten für eine entsprechende Anzahl von Phasen einer Wechselspannung angepasst ausgebildet wird. Darüber hinaus ist es möglich, zwei oder mehrere Wandlereinheiten im Parallelbetrieb zu betreiben, um beispielsweise eine vorgegebene Leistung erreichen zu können, die mit einer Wandlereinheit allein nicht erreicht werden könnte. Dadurch, dass die Erzeugung von Taktmustern bereits durch das Wandlereinheitsmodul selbst realisiert ist, ist eine einfache Anpassung an beliebige Mehrpegelenergiewandlerkonstruktionen ohne großen Aufwand möglich. Insbesondere erlaubt es die Erfindung, standardisierte Wandlereinheiten zur Erstellung von Mehrpegelenergiewandlern zu nutzen und damit den Aufwand für die Erstellung eines Mehrpegelenergiewandlers deutlich zu reduzieren. Vorzugsweise ist eine gerade Anzahl von Wandlermodulen in einer Wandlereinheit vorgesehen. Darüber hinaus ist für jede Wandlereinheit des Mehrpegelenergiewandlers die gleiche Anzahl an Wandlermodulen vorgesehen. Bei Sonderanwendungen kann hiervon jedoch auch abgewichen werden.

Eine Weiterbildung der Erfindung sieht vor, dass das Wandlermodul eine Messschaltung zum Messen wenigstens einer elektrischen Größe in der Reihenschaltung der Halbleiterschalter aufweist, wobei die Messschaltung eingerichtet ist, ein Messsignal zu erzeugen und den Taktgeber bereitzustellen. Vorzugsweise ist die Messschaltung hierfür an den Taktgeber angeschlossen. Es kann vorgesehen sein, dass der Taktgeber das Messsignal an die übergeordnete Steuereinrichtung übermittelt. Dieses kann von der übergeordneten Steuereinrichtung genutzt werden, um entsprechende Steuersignale an den Taktgeber zu übermitteln, sodass er in gewünschter Weise Taktmuster für die Ansteuerung der Halbleiterschalter der Wandlermodule der Wandlereinheiten erzeugt. Es kann aber auch vorgesehen sein, dass das Messsignal lediglich vom Taktgeber ausgewertet wird, um die Steuersignale für die Halbleiterschalter entsprechend einzustellen. Vorzugsweise kann die Messschaltung eine Spannungsmessschaltung umfassen. Mittels der Spannungsmessschaltung kann beispielsweise eine elektrische Spannung an einem Wandlermodulkondensator erfasst werden.

Weitere Vorteile und Merkmale sind in der folgenden Beschreibung von Ausführungsbeispielen anhand der Figuren zu entnehmen. In den Figuren bezeichnen gleiche Bezugszeichen gleiche Bauteile und Funktionen.

Es zeigen:
- FIG 1: in einer schematischen Blockschaltbildansicht einen Mehrpegelenergiewandler mit einer zentralen Gesamtsteuereinrichtung und
- FIG 2: in einer schematischen Blockschaltbildansicht einen Mehrpegelenergiewandler gemäß der Erfindung mit einer dezentralen Hardwaresteuerung.

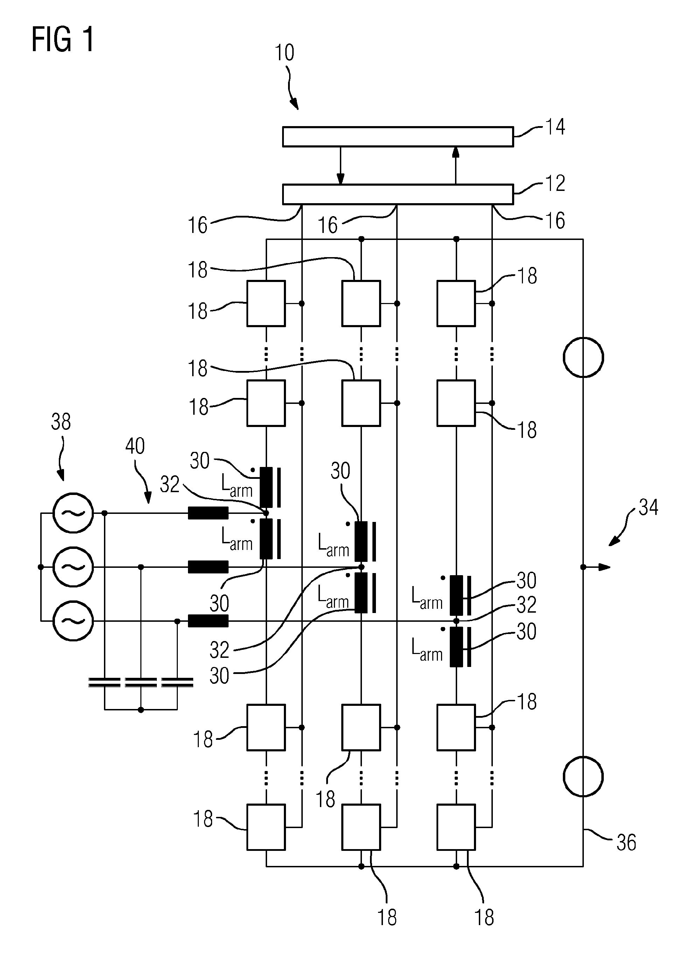

FIG 1 zeigt in einer schematischen Schaltbilddarstellung einen Mehrpegelenergiewandler 10 als getakteten Energiewandler mit einer Mehrzahl von nicht bezeichneten Wandlereinheiten, die vorliegend an einem gemeinsamen Gleichspannungszwischenkreis 36 parallelgeschaltet angeschlossen sind. Jede der Wandlereinheiten umfasst eine Reihenschaltung aus einer Mehrzahl von Wandlermodulen 18.

Nicht in der FIG dargestellt ist, dass jedes der Wandlermodule 18 eine Reihenschaltung aus zwei in Reihe geschalteten Halbleiterschaltern, vorliegend IGBTs, sowie eine Treiberschaltung zum Steuern der IGBTs des jeweiligen Wandlermoduls 18 in einem Schaltbetrieb aufweist. Der Reihenschaltung aus zwei Halbleiterschaltern ist ferner ein Wandlermodulkondensator parallelgeschaltet. Die Wandlermodule 18 entsprechen dem Grunde nach Wandlermodulen, wie sie im Stand der Technik in Halbbrückenschaltung für den Einsatz bei Mehrpegelenergiewandlern wie dem Mehrpegelenergiewandler 10, wie er hier beschrieben ist, üblich sind. Die Einzelheiten der Wandlermodule 18 sind deshalb vorliegend nicht weiter dargestellt.

In bekannter Weise sind in jeder der Wandlereinheiten die ihr zugeordneten Wandlermodule 18 in Serienschaltung kaskadiert verschaltet. Vorliegend ist eine gerade Anzahl von Wandlermodulen 18 pro Wandlereinheit vorgesehen, wobei mittig der jeweiligen Reihenschaltungen der Wandlermodule 18 Mittelanschlüsse 32 vorgesehen sind, an denen eine Filtereinheit 40 angeschlossen ist. An die Filtereinheit 40 ist ferner ein dreiphasiges Wechselspannungsnetz 38 angeschlossen.

Zum Zwecke der Inbetriebnahme des Mehrpegelenergiewandlers 10 ist am Gleichspannungszwischenkreis 36 eine Vorladeschaltung 34 angeschlossen, die jedoch nur während einer Inbetriebnahme des Mehrpegelenergiewandlers 10 aktiv ist. Während des bestimmungsgemäßen Betriebs des Mehrpegelenergiewandlers 10 ist die Vorladeschaltung 34 nicht aktiv und greift auch nicht in die Funktion des Mehrpegelenergiewandlers 10 ein.

Die Wandlermodule 18 sind an Steuerungsanschlüsse 16 einer gemeinsamen Hardwaresteuerung 12 angeschlossen. Die gemeinsame Hardwaresteuerung 12 erzeugt sämtliche Signale, die für die unmittelbare Steuerung der Halbleiterschalter der Wandlermodule 18 erforderlich sind. Die Hardwaresteuerung 12 ist deshalb spezifisch für den gesamten Mehrpegelenergiewandler 10.

Die Hardwaresteuerung 12 ist ihrerseits über eine nicht bezeichnete Kommunikationsschnittstelle an eine Steuereinrichtung 14 angeschlossen, über die die Hardwaresteuerung 12 entsprechend gesteuert wird. Mittels der Steuereinrichtung 14 kann der Energiefluss des Mehrpegelenergiewandlers 10 in gewünschter Weise gesteuert werden.

Dem Grunde nach basiert der Mehrpegelenergiewandler 10 auf einer Reihenschaltung aus schaltbaren Kondensatoren, nämlich den Wandlermodulkondensatoren der Wandlermodule 18. Die Wandlermodule 18 besitzen jeweils zwei mögliche Schaltzustände, und zwar den eingefügten und den gebrückten Zustand. Im eingefügten Zustand ist der Wandlermodulkondensator im Leistungspfad aktiviert, wohingegen im gebrückten Zustand der Wandlermodulkondensator in dem Leistungspfad inaktiv ist. Um die energietechnische Kopplung zwischen dem Gleichspannungszwischenkreis 36 und dem dreiphasigen Wechselspannungsnetz 38 herzustellen, werden die Halbleiterschalter der Wandlermodule 18 in geeigneter Weise durch die Hardwaresteuerung 12 und die Steuereinrichtung 14 gesteuert. Durch ein geeignetes Schalten der Halbleiterschalter der Wandlermodule 18 kann der Mehrpegelenergiewandler 10 auf dieser Basis wechselspannungsseitig eine mehrstufige Spannung abbilden.

Da die Spannung der Wandlermodulkondensatoren variabel ist, ist es üblich, die elektrischen Spannungen sämtlicher Wandlermodulkondensatoren mittels einer jeweiligen, nicht dargestellten Spannungsmessschaltung eines jeden Wandlermoduls 18 zu messen und die Wandlermodule 18 der jeweiligen Wandlereinheit in Bezug auf ihre Aktivierung beziehungsweise Deaktivierung zu sortieren. Auf Basis eines aktuellen Wandlereinheitsstromes, das heißt, ein Strom der durch eine Wandlereinheit vom Gleichspannungszwischenkreis 36 zur Wechselspannungsseite 38 strömt, wird dann ein geeignetes Schaltmuster für die Halbleiterschalter der Wandlermodule 18 für das Einfügen ihrer jeweiligen Wandlermodulkondensatoren bestimmt, sodass ein stabiler Betrieb des Mehrpegelenergiewandlers 10 gewährleistet werden kann.

Zu diesem Zweck weist jedes Wandlermodul 18 die Spannungsmessschaltung zum Messen der elektrischen Spannung des Wandlermodulkondensators auf, wobei die Messschaltung eingerichtet ist, ein jeweiliges Messsignal zu erzeugen und bereitzustellen.

Sowohl das Sortieren als auch das Erzeugen der Pulsmuster wird von der Hardwaresteuerung 12 in dieser Ausgestaltung vorgenommen. Vorliegend ist die Hardwaresteuerung 12 als ASIC realisiert. Alternativ kann sie auch als FPGA realisiert sein, beispielsweise um eine höhere Flexibilität erreichen zu können. Die eigentliche Regelung des Mehrpegelenergiewandlers 10 erfolgt durch die Steuereinrichtung 14. Diese wird meist mittels einer dezidierten Rechnereinheit realisiert.

Da die zur FIG 1 beschriebene Steuerung des Mehrpegelenergiewandlers 10 im Wesentlichen nur die Gerätesicht betrachtet, ist sowohl die Anzahl der Wandlermodule 18 als auch die Anzahl möglicher Phasen einer Wechselspannung durch die Gerätesteuerung, die aus der Hardwaresteuerung 12 und der Steuereinrichtung 14 gebildet ist, beschränkt.

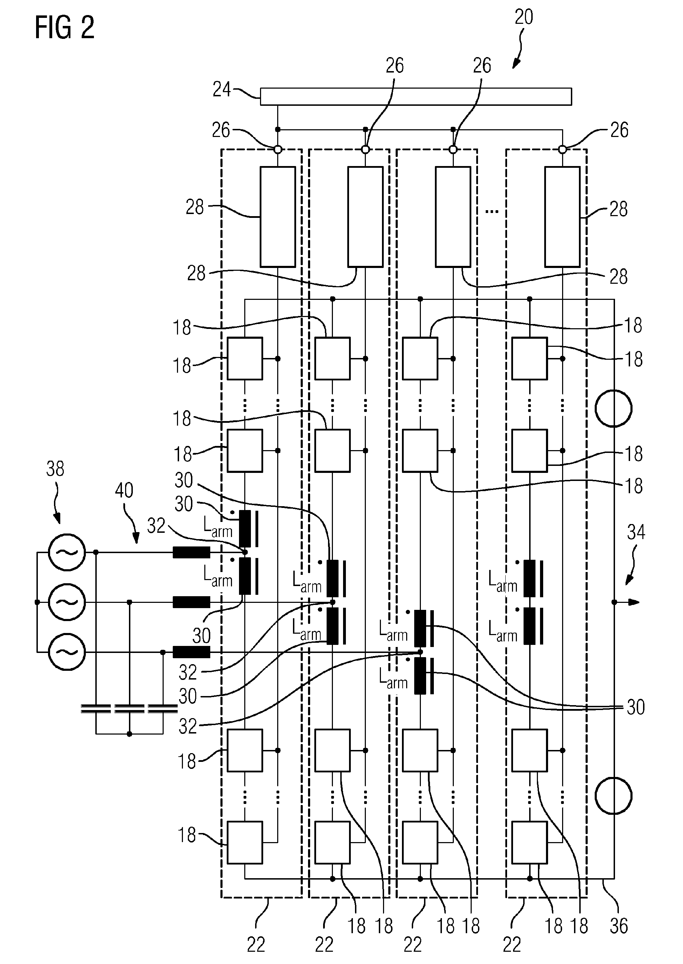

Mit der Ausgestaltung gemäß FIG 2 kann diese Beschränkung aufgehoben werden. Zu diesem Zweck sieht die Ausgestaltung gemäß FIG 2 vor, dass Wandlereinheiten 22 gebildet werden, die die Reihenschaltung aus Wandlermodulen 18 - wie zur FIG 1 beschrieben - enthalten. Darüber hinaus enthält jede Wandlereinheit 22 - abweichend zum Mehrpegelenergiewandler 10 gemäß FIG 1 - einen eigenen Taktgeber 28, der sämtliche Steuersignale für sämtliche Halbleiterschalter der Wandlermodule 18 der jeweiligen Wandlereinheit 22 erzeugt. Ansonsten entspricht die Schaltungsstruktur bezüglich des Leistungsteils der Schaltungsstruktur wie sie bereits zur FIG 1 erläutert wurde, weshalb ergänzend auf diese Ausführungen verwiesen wird.

Im weiteren Unterschied zur FIG 1 ist vorgesehen, dass die Taktgeber 28 ihrerseits über einen nicht bezeichneten Systembus an eine Steuereinrichtung 24 angeschlossen sind. Zu diesem Zweck weist jede Wandlereinheit 22 einen mittels des Taktgebers 28 bereitgestellten Steueranschluss 26 auf.

Die Anzahl der Wandlermodule 18 pro Wandlereinheit 22 ist wieder eine gerade Anzahl, wobei nach der halben Anzahl der Wandlermodule 18 jeweils eine Reihenschaltung aus zwei Induktivitäten 30 zwischengeschaltet ist, die jeweils einen Mittelanschluss 32 bereitstellen, an den die Filtereinheit 40 angeschlossen ist. Diese Schaltung ist dem Grunde nach auch bei dem Mehrpegelenergiewandler 10 gemäß FIG 1 vorgesehen.

FIG 2 zeigt demnach einen Mehrpegelenergiewandler 20, der leistungsseitig eine Grundstruktur ähnlich dem der FIG 1 aufweist, wobei im Unterschied zur FIG 1 die Anzahl möglicher Wandlereinheiten 22 in beliebiger Weise ergänzt oder reduziert werden kann. Dies wird im Wesentlichen dadurch erreicht, dass jede der Wandlereinheiten 22 ihren eigenen Taktgeber 28 aufweist. Der Taktgeber 28 kann ebenso wie die Hardwaresteuerung 12 durch ein ASIC oder ein FPGA gebildet sein.

Da bei der Ausgestaltung gemäß FIG 2 die Steuerung der einzelnen Phasen des Wechselspannungsnetzes 38 voneinander unabhängig ist, kann ebenfalls die Pulsmustererzeugung unabhängig voneinander, das heißt, also phasen- oder armbezogen realisiert sein.

FIG 2 zeigt in dem Ausführungsbeispiel eine phasenbezogene Steuerung, indem eine jeweilige Wandlereinheit 22 einzeln angesteuert werden kann. Die Regelung des Mehrpegelenergiewandlers 20 erfolgt mittels der Steuereinrichtung 24. Die Kommunikation zwischen der Steuereinrichtung 24 und der Wandlereinheiten 22 erfolgt mittels eines internen Systembusses. Aufgrund dessen kann eine geringe Datenrate realisiert werden, sodass der interne Systembus sogar drahtlos, beispielsweise mittels Infrarot oder Funk realisiert werden kann.

Der Vorteil der Ausgestaltung gemäß FIG 2 liegt in der Aufteilung der hardwarenahen Steuerung. Durch die hier mit der Erfindung vorgeschlagenen Aufteilung ergeben sich eine Reihe von Vorteilen. Einerseits entfällt die Phasenbegrenzung des Umrichters, sodass mit minimalem Aufwand mehr Phasenumrichter mit nahezu beliebiger Phasenanzahl realisiert werden können. Des Weiteren kann die Systemdynamik des Mehrpegelenergiewandlers 20 deutlich erhöht werden. Durch Entfall einer übergeordneten Steuerung kann sogar ein komplexeres Gesamtsystem, beispielsweise mehrere Mehrpegelenergiewandler innerhalb einer Zeitscheibe der Umrichterregelung geregelt werden. Darüber hinaus können alle systemrelevanten Daten vorteilhaft lokal vorhanden sein, wodurch sich ein Zeitvorteil hinsichtlich der Signalverarbeitung ergibt. Die Einsparung einer gesamten Kommunikations- sowie Steuerungsebene führt ferner zu einem Kostenvorteil in der Gesamtbetrachtung. Durch eine Reduktion der zur Systemregelung benötigten Daten kann, insbesondere bei einer drahtlosen Kommunikation, die Ansteuerung sogar räumlich ausgedehnt werden.

Die Ausführungsbeispiele dienen lediglich der Erläuterung der Erfindung und sind für diese nicht beschränkend. Insbesondere können Merkmale in nahezu beliebiger Weise miteinander kombiniert werden, und zu weiteren vorteilhaften Ausgestaltungen der Erfindung zu gelangen.

Ferner können Vorrichtungsmerkmale auch als Verfahrensmerkmale und umgekehrt angegeben sein.

## Patentansprüche

1. Getakteter Energiewandler (20) mit wenigstens zwei elektrisch miteinander gekoppelten Wandlereinheiten (22) sowie einer Steuereinrichtung (24) zum Steuern der Wandlereinheiten (22), wobei jede der Wandlereinheiten (22) einen Steuerungsanschluss (26) zum Anschließen an die Steuereinrichtung (24) aufweist und wobei jede der Wandlereinheiten (22) wenigstens ein Wandlermodul (18) mit einer Reihenschaltung aus zwei in Reihe geschalteten Halbleiterschaltern sowie einer Treiberschaltung zum Steuern aller Halbleiterschalter des wenigstens einen Wandlermoduls (18) in einem Schaltbetrieb aufweist, **dadurch gekennzeichnet,**
**dass** jede der Wandlereinheiten (22) einen an die Treiberschaltung des wenigstens einen Wandlermoduls (18) angeschlossenen Taktgeber (28) aufweist, der den Steuerungsanschluss (26) bereitstellt und der eingerichtet ist, Steuersignale für die Halbleiterschalter des wenigstens einen Wandlermoduls (18) der Wandlereinheit (22) zu erzeugen.

2. Getakteter Energiewandler nach Anspruch 1, **dadurch gekennzeichnet, dass** das Wandlermodul (18) eine zu der Reihenschaltung parallelgeschaltete, zweite Reihenschaltung aus zwei weiteren in Reihe geschalteten Halbleiterschaltern aufweist, wobei der Taktgeber (28) eingerichtet ist, die Steuersignale für sämtliche Halbleiterschalter des Wandlermoduls (18) der jeweils zugeordneten Wandlereinheit (22) zu erzeugen.

3. Getakteter Energiewandler nach Anspruch 1 oder 2, **dadurch gekennzeichnet, dass** die Wandlereinheiten (22) an einem gemeinsamen Gleichspannungszwischenkreis (36) des getakteten Energiewandlers (20) parallelgeschaltet angeschlossen sind.

4. Getakteter Energiewandler nach einem der Ansprüche 1 bis 3, **dadurch gekennzeichnet, dass** jedes der Wandlermodule (18) der Wandlereinheiten (22) einen zur Reihenschaltung der Halbleiterschalter parallelgeschalteten Wandlermodulkondensator aufweist.

5. Getakteter Energiewandler nach Anspruch 4, **dadurch gekennzeichnet, dass** jede der Wandlereinheiten (22) wenigstens zwei Wandlermodule (18) aufweist, die über wenigstens einen Mittelanschluss der Reihenschaltung der jeweiligen Wandlermodule (18) kaskadiert angeschlossen sind, wobei der Taktgeber (28) eingerichtet ist, die Steuersignale für sämtliche Halbleiterschalter der Wandlermodule (18) der jeweils zugeordneten Wandlereinheit (22) zu erzeugen.

6. Getakteter Energiewandler nach einem der Ansprüche 1 bis 5, **dadurch gekennzeichnet, dass** das Wandlermodul (18) eine Messschaltung zum Messen wenigstens einer elektrischen Größe in der Reihenschaltung der Halbleiterschalter aufweist, wobei die Messschaltung eingerichtet ist, ein Messsignal zu erzeugen und dem Taktgeber (28) bereitzustellen.
